# EUROPEAN PATENT SPECIFICATION

(11) **EP 2 640 787 B1**
(45) Date of publication and mention of the grant of the patent: **24.08.2016**
(21) Application number: 11787814.0
(22) Date of filing: 15.11.2011
(51) Int. Cl.: C09D 5/00

(54) **MULTIPURPOSE PAINT FORMULATION**
MULTIFUNKTIONSLACKFORMULIERUNG
FORMULATION DE PEINTURE À USAGES MULTIPLES

(30) Priority: 16.11.2010 US 414195 P
(43) Date of publication of application: 25.09.2013
(73) Proprietor: Akzo Nobel Coatings International B.V., 6824 BM Arnhem (NL)
(72) Inventor: FRENCH, Maria, Westlake OH 44145 (US); KASZUBSKI, Glen, Joseph, Copley OH 44321 (US)
(74) Representative: Akzo Nobel IP Department
(86) International application number: PCT/EP2011/070170
(87) International publication number: WO 2012/066004

(56) References cited:
- EP-A1- 1 505 127
- WO-A2-2010/002934
- US-A- 5 888 626
- US-A1- 2008 054 230

## Description

### Background of the invention

### 1. Field of the Invention

The present invention relates to methods of applying paint formulations.

### 2. Description of Related Art

One impediment to achieving a smooth painted finish is superficial surface imperfections in the substrate to be painted. This is a particular concern for architectural surfaces, such as walls and ceilings. Superficial surface imperfections include without limitation, hairline cracks, nail holes, scratches and other small blemishes. There are known architectural paints that cover or fill superficial surface imperfections. However, these paints leave a textured rather than smooth finish. Further, some known architectural paints that do provide a smooth finish may appear to fill or cover superficial surface imperfections when wet. However, all or a portion of such superficial surface imperfections tend to reappear upon drying. Spackle or such similar filler may be used to patch such superficial surface imperfections prior to painting. However, this can be time consuming and inconvenient.

### Summary of the invention

The present invention includes a method of applying a paint formulation to a substrate having superficial surface imperfections comprising
applying with a first paint applicator the paint formulation to the superficial imperfections in the surface to be painted,
allowing the applied paint formulation to dry until it is at least dry to the touch,
applying with a second paint applicator the paint formulation to the surface of the substrate to produce a first paint surface, the paint formulation comprising a water-based latex and microspheres, wherein the microspheres have an effective particle size and are present in an effective amount to both provide a smooth paint finish and fill, cover or conceal superficial blemishes in a painted substrate when the paint formulation is dry, wherein the effective particle size is between 20 and 200 microns and where the effective amount of microspheres is between 3 and up to 12% by volume of the paint formulation.

### Description of the invention

Paint formulations are disclosed that provide both a smooth finished surface when dry and fill, substantially fill, cover or conceal to a point of aesthetic acceptability to a typical user, superficial surface imperfections in substrates to be painted with broad wall paint. Superficial surface imperfections are typically, for non-limiting example, small blemishes, hairline cracks, scratches and nail holes about 1/16 inch or smaller, such as those used to hang pictures and other decorative items. Though not so limited, substrates to be painted with broad wall paint are typically dry wall, concrete, plaster and masonry.

An additional advantage of the paint formulations disclosed are that they may be used as a primer, frequently making it unnecessary to use a separate primer formulation to achieve the desired finished paint surface. A paint formulation of the current invention may be employed as the primer layer.

Although the paint formulations disclosed remedies superficial surface imperfections without the need for filler, and primer is frequently unnecessary, other typical substrate preparation is still useful, such as without limitation, removing any portion of the substrate that may protrude from the superficial surface imperfection so that the edges of the such surface imperfections are flush with the surface of the substrate.

The paint formulation technology disclosed comprises a water based latex binder and microspheres wherein the microspheres have an effective particle size and are present in an effective amount to both provide a smooth paint finish and fill or conceal superficial blemishes in a painted substrate when the paint formulation is dry. The effective particle size is between 10 and 200 microns. An effective amount of microspheres may be between 3% and 6% by volume of a white base paint formulation and up to 12% weight by volume of a clear paint formulation. In one embodiment the latex binder has a low Tg. In another embodiment the paint formulation has a Tg of about 8-9 °C & a minimum film formation temperature in the range of about 2 to 11 °C.

The particles comprise microspheres having a particle size between 10 and 200 microns. One embodiment of the microspheres is glass beads or glass bubbles. In other embodiments the glass beads have a particle size distribution between 30 to 115 (with an effective top particle size of 120) and 20 to 80 (with an effective top particle size of 85) available in the K Series of glass bubbles from 3M Energy and Advanced Materials Division, St. Paul, M. In other embodiments, the glass beads have a particle size distribution of 30 to 115 (effective top size 120), 30 to 105 microns (effective top particle size of 115 microns), 30 to 90 (effective top size of 105), 25 to 90 (effective top size of 105) and 20 to 80 (effective top size of 85) available, respectively, as K1, K15, k30, K25 and K37 glass bubbles from 3M Energy and Advanced Materials Division, St. Paul, MN. In another embodiment, the particles are plastic beads, for non-limiting example Aquatex beads 325,230,200, and 140, having respectively a maximum particle size of 44, 63, 74, and 105 microns and a mean particle size of 11-15. 36-43, 35-45 and 45-55 microns, available from Micro Powders, Inc., Tarrytown, New York. Combinations of different grades and profiles of particles may be used, including without limitation glass bubbles and beads and plastic beads. In one embodiment the glass or plastic beads or bubbles are present up 12% by volume of a clear paint formulation. In a white base, glass or plastic beads or bubbles are present 3 to 6% by volume of the paint formulation.

In another embodiment, one or more rheological additives are present in the paint formulation, for non-limiting example, the combination of Acrysol SCT 275 non-ionic urethane rheological modifier and Aquaflow NHS300 non-ionic high shear rheological modifier, used in volume ratios of 50-80%:20-50% SCTNHS. Embodiments using rheological additives may be white tint base and intermediate tint base formulas.

In addition to the latex and particles, the paint formulations may also comprise other components, including without limitation those typical for latex paint formulations. These other components may include thickeners, surfactants, pigments, fillers deformers, solvents, coalescents, plasticizers, biocides and dispersants.

The current invention concerns paint application methods.

In one embodiment, the paint formulation is applied to a substrate having superficial surface imperfections by a method comprising
1. Applying with a first paint applicator the paint formulation to the superficial surface imperfections.
2. Allowing the applied paint formulation to dry until it is at least dry to the touch.
3. With a second paint applicator, applying the paint formulation to the surface to be painted to produce a first paint surface.

In another embodiment, the method of applying the paint formulation comprises the following additional steps
4. Allowing the first paint surface to dry until it is at least dry to the touch.
5. With a third paint applicator, applying the paint formulation to the first paint surface to produce a second paint surface.

Another method of applying the paint formulation comprises
1. Applying with the first paint applicator paint formulation to the superficial surface imperfections in the surface to be painted.
2. Allowing the applied paint formulation to dry until it is at least dry to the touch.
3. With a second paint applicator, applying a second application of the paint formulation to the dry paint formulation that is at least dry to the touch.
4. Allowing the second application of the paint formulation to dry until it is at least dry to the touch.
5. With a third paint applicator, applying the paint formulation to the surface to be painted to produce a paint surface.

The first, second and third paint applicators may be the same or different. Paint applicators useful in the current invention may include, but are not limited to, paint brushes, paint rollers, foam paint brushes, sponges, palette knives, flat plastic edges, doctor blades, putty knives or spatulas,
paper towel or other flexible semi- absorbent woven or nonwoven material in sheet form,
the corner of a paper towel or other semi-absorbent woven or nonwoven material in sheet form;
the corner of a paper towel or other semi-absorbent woven or nonwoven material in sheet form folded at least once to form at least one comer,
the corner of a paper towel or other semi-absorbent woven or nonwoven material in sheet form folded in half multiple times to form at least one corner,
the corner of a paper towel or other semi-absorbent woven or nonwoven material in sheet form folded in half multiple times to form an approximate square,
the corner of a paper towel or other semi-absorbent woven or nonwoven material in sheet form folded in half four times at to form an approximate square.

In one embodiment of the method of applying the paint formulation, the first paint applicator is a brush and the second and third paint applicators are paint rollers.

In another embodiment, the first and second paint applicators are a brush and the third paint applicator is a roller.

In one embodiment the first paint applicator is the corner of a paper towel.

In another embodiment the first paint applicator is the corner of a paper towel wherein the corner is formed by folding the paper towel in half.

In another embodiment the first paint applicator is the corner of a paper towel where the corner is formed by folding the paper towel multiple times.

In another embodiment the first paint applicator is the corner of a paper towel wherein the corner is formed by folding the paper towel in half multiple times.

In another embodiment the first paint applicator is the corner of a paper towel wherein the corner is formed by folding the paper towel in half multiple times to form an approximate square.

In another embodiment the first paint applicator is the corner of a paper towel, wherein the corner is formed by folding the paper towel in half four times to form an approximate square.

In one embodiment, the first paint applicator is the corner of a paper towel or other material in sheet form, the corner formed or not by one of the folding methods described above. In a further embodiment, the paint application method comprises bringing a corner of the paper towel or other material in sheet form into contact with the paint and applying the paint to superficial surface imperfections on the surface to be painted, including without limitation, hairline cracks, nail holes, scratches and other small blemishes, then removing excess paint. One method of removing the excess paint is to use a clean corner of the paper towel or other material in sheet form.

### Example

The following paint formulation was produced according to the instant disclosure:

| MATERIAL | LBS/100 GALS | GALS | % |
|---|---|---|---|
| PRE THINDOWN (made on an air motor with a paddle stirrer) | | | |
| ROVACE 9900 EMULSION from Dow | 314.246 | 35.19 | 31.18 |
| GO TO LOW SPEED | | | |
| TIONA 596 SLURRY from Millennium Chemicals | 270.082 | 13.779 | 26.798 |
| WATER,TAP | 21.994 | 2.64 | 2.182 |
| AGITATE FOR 5 MINS ,LOW SPEED MIX NEXT ITEM WELL BEFORE USE | | | |
| DREWPLUS T 4507 FOAM from Aqualon | 0.88 | 0.12 | 0.087 |
| WATER,TAP | 8.797 | 1.056 | 0.873 |
| AGITATE FOR 10 MINS ,LOW SPEED | | | |

| GRIND (made on a Cowles high speed disperser with impeller blade) | | | |
|---|---|---|---|
| WATER,TAP | 47.506 | 5.703 | 4.714 |
| LATTICE NTC-80 from FMC Corporation | 1.32 | 0.102 | 0.131 |
| MIX FOR 15 MINS ,HIGH SPEED | | | |
| WATER,TAP | 1.759 | 0.211 | 0.175 |
| NATROSOL PLUS 330 from Aqualon | 0.44 | 0.039 | 0.044 |
| DOWICIL 75 from Dow | 1.1 | 0.085 | 0.109 |
| WATER,TAP | 1.759 | 0.211 | 0.175 |
| MIX NEXT ITEM WELL BEFORE USE | | | |
| DREWPLUS T 4304 FOAM from Aqualon | 1.759 | 0.238 | 0.175 |
| TAMOL 731A DISPERSANT from Dow | 4.399 | 0.478 | 0.436 |
| WATER, TAP | 7.038 | 0.845 | 0.698 |
| TRYCOL 7000 from Cogn is | 2.639 | 0.302 | 0.262 |
| AQU D-4341, STRODEX from Aqualon | 2.639 | 0.278 | 0.262 |
| | | | |
| SAFSIL CT450 from CR Minerals Company LLC | 82.992 | 4.15 | 8.235 |
| MINEX 7 from Unimim | 26.392 | 1.216 | 2.619 |
| WATER,TAP | 3.519 | 0.422 | 0.349 |
| DISPERSE FOR 30 MINS ,HIGH SPEED WASH MILL | | | |
| WATER, TAP | 35.19 | 4.225 | 3.492 |

| Add Grind to Pre thindown while stirring with paddle stirrer on the air motor and then follow with following thin down process. | | | |
|---|---|---|---|
| THIN DOWN | | | |
| WATER, TAP | 63.617 | 7.637 | 6.312 |
| PREMIX NEXT 3 ITEMS WITH COWLES-TYPE AGITATOR | | | |
| WATER, TAP | 48.386 | 5.809 | 4.801 |
| NATROSOL PLUS 330 from Aqualon | 0.88 | 0.077 | 0.087 |
| WATER, TAP | 1.759 | 0.211 | 0.175 |
| ADD PREMIX IMMEDIATELY WITH HIGH SPEED AGITATION WASH PREMIX TANK WITH NEXT ITEM | | | |
| WATER, TAP | 3.519 | 0.422 | 0.349 |
| AGITATE FOR 25 MINS ,HIGH SPEED | | | |
| AMMONIA HYDROXIDE 19 | 0.88 | 0.113 | 0.087 |
| AGITATE FOR 15 MINS ,HIGH SPEED | | | |
| AQUAFLOW NHS-300 RHE from Aqualon | 4.399 | 0.509 | 0.436 |
| AGITATE FOR 10 MINS ,HIGH SPEED | | | |
| ACRYSOL SCT-275 RHEO from Dow | 9.677 | 1.125 | 0.96 |
| AGITATE FOR 20 MINS ,HIGH SPEED | | | |
| DREWPLUS T 4507 FOAM from Aqualon | 1.759 | 0.24 | 0.175 |
| AGITATE FOR 20 MINS ,HIGH SPEED | | | |
| POLYPHASE PW40 from Troy Chemical Corp. | 1.32 | 0.132 | 0.131 |
| AGITATE FOR 60. TO 60. MINUTES BEFORE TESTING | | | |
| K15 glass bubbles from 3M Energy and Advanced Materials | 35.19 | 12.434 | 3.492 |
| AGITATE FOR 60. TO 60. MINUTES BEFORE TESTING | | | |
| | 1007.837 | 99.999 | 100.001 |

The produced paint was tested as follows:

### Nail Hole Testing

### Test #1

1. Nail holes of three different sizes (nail from a. picture hook that can support 50 lbs, nail from a. picture hook that can support 100 lbs and a small finish nail) were made in dry wall.
2. The produced paint formulation was applied with a brush to the nail holes and allowed to dry.
3. The dry wall was painted with a roller with one coat of the paint formulation and allowed to dry.
4. A second coat of paint formulation was applied with a roller and allowed to dry.
5. The resulting nail hole coverage was good for all three sizes of nail hole.

### Test #2

Test #1 was repeated except a putty knife was used rather than a brush in step 2. The resulting nail hole coverage was good for all three sizes of nail hole.

### Hairline Crack Testing

### Test #3

1. A 7 inch by 12 inch dry wall piece was cut in half.
2. The two pieces were rejoined with joining compound and the joining compound was allowed to dry.
3. Primer was applied to the joined panel.
4. The joined panel was cracked to generate a hairline crack.
5. The produced paint formulation was applied with a brush to the hairline crack and allowed to dry.
6. The dry wall was painted with a roller with one coat of the paint formulation and allowed to dry.
7. A second coat of paint formulation was applied with a roller and allowed to dry.
8. The paint formulation successfully covered the hairline crack.

Based on visual observation of the painted dry wall in Tests #1-#3, the produced paint formulation when dry provided a smooth finish comparable to conventional commercial latex paint.

## Claims

1. A method of applying a paint formulation to a substrate having superficial surface imperfections comprising
applying with a first paint applicator the paint formulation to the superficial imperfections in the surface to be painted,
allowing the applied paint formulation to dry until it is at least dry to the touch,
applying with a second paint applicator the paint formulation to the surface of the substrate to produce a first paint surface,
wherein the paint formulation comprises a water-based latex and microspheres, wherein the microspheres have an effective particle size and are present in an effective amount to both provide a smooth paint finish and fill, cover or conceal superficial blemishes in a painted substrate when the paint formulation is dry,
wherein the effective particle size is between 10 and 200 microns and wherein the effective amount of microspheres is between 3 and up to 12% by volume of the paint formulation.

2. A method of applying a paint formulation according to claim 1 further comprising allowing the first paint surface to dry until it is at least dry to the touch,
and with a third paint applicator, applying the paint formulation to the first paint surface to produce a second paint surface.

3. A method of applying a paint formulation according to claim 1 or 2 wherein the first paint applicator is a flexible semi- absorbent woven or nonwoven material in sheet form.

4. A method of applying a paint formulation according to claim 3 wherein the first paint applicator is a corner of the semi-absorbent woven or nonwoven material in sheet form.

5. A method of applying a paint formulation according to claim 4 wherein the corner is formed by folding at least once the semi-absorbent woven or nonwoven material in sheet form.

6. A method of applying a paint formulation according to claim 5 wherein the corner is formed by folding the semi-absorbent woven or nonwoven material in sheet form in half multiple times.

7. A method of applying a paint formulation according to claim 6 wherein the corner of the semi-absorbent woven or nonwoven material in sheet form is formed by folding the material in sheet form in half multiple times at to form an approximate square.

8. A method of applying a paint formulation according to claim 7 wherein semi-absorbent woven or nonwoven material in sheet form is folded in half four times to form an approximate square.

9. A method of applying a paint formulation according to any one of claims 3 through 8 wherein the flexible semi-absorbent woven or nonwoven material is a paper towel.

10. A method of applying a paint formulation according to anyone of the preceding claims wherein the microspheres are glass beads.

11. A method of applying a paint formulation according to claim 10 wherein the glass beads have a particle size distribution between 30 to 1 15 microns with an effective top particle size of 120 microns and 20 to 80 microns with an effective top particle size of 85 micron.

12. A method of applying a paint formulation according to claim 10 wherein the glass beads have a particle size distribution 30 to 105 microns with an effective top particle size of 1 15 microns.

13. A method of applying a paint formulation according to anyone of the claims 1 to 9 wherein the microspheres are plastic beads.

14. A method of applying a paint formulation according to any one of the preceding claims wherein the microspheres comprise 3% to 6% by volume of the paint formulation.

## Patentansprüche

1. Verfahren zum Auftragen einer Lackformulierung auf ein Substrat, das auf der Oberfläche Unvollkommenheiten aufweist, umfassend
das Auftragen der Lackformulierung auf die Unvollkommenheiten auf der zu lackierenden Oberfläche mit einem ersten Lack-Applikator, Trocknenlassen der aufgetragenen Lackformulierung, bis sie zumindest berührungstrocken ist,
Auftragen der Lackformulierung auf die Substratoberfläche mit einem zweiten Lack-Applikator, um eine erste Lackoberfläche herzustellen,
wobei die Lackformulierung wasserbasiertes Latex und Mikrosphären umfasst, wobei die Mikrosphären eine effektive Partikelgröße haben und in einer effektiven Menge vorhanden sind, so dass sie einen glatten Finish und
Fill liefern, die Fehler an der Oberfläche eines lackierten Substrates abdecken oder verbergen, wenn die Lackformulierung trocken ist,
wobei die effektive Partikelgröße zwischen 10 und 200 Mikron liegt und wobei die effektive Menge an Mikrosphären zwischen 3 und bis zu 12 Vol.% der Lackformulierung beträgt.

2. Verfahren zum Auftragen einer Lackformulierung nach Anspruch 1, weiterhin umfassend
das Trocknenlassen der ersten Lackoberfläche, bis sie zumindest berührungstrocken ist,
und Auftragen der Lackformulierung auf die erste Lackoberfläche mit einem dritten Lack-Applikator, um eine zweite Lackoberfläche herzustellen.

3. Verfahren zum Auftragen einer Lackformulierung nach Anspruch 1 oder 2, wobei der erste Lack-Applikator ein elastisches, semi-saugfähiges Gewebe oder Vlies in Blattform ist.

4. Verfahren zum Auftragen einer Lackformulierung nach Anspruch 3, wobei der erste Lack-Applikator eine Ecke des semi-saugfähigen Gewebes oder Vlieses in Blattform ist.

5. Verfahren zum Auftragen einer Lackformulierung nach Anspruch 4, wobei die Ecke durch mindestens einmaliges Falten des semi-saugfähigen Gewebes oder Vlieses in Blattform gebildet ist.

6. Verfahren zum Auftragen einer Lackformulierung nach Anspruch 5, wobei die Ecke durch mehrmaliges mittiges Falten des semi-saugfähigen Gewebes oder Vlieses in Blattform gebildet ist.

7. Verfahren zum Auftragen einer Lackformulierung nach Anspruch 6, wobei die Ecke des semi-saugfähigen Gewebes oder Vlieses in Blattform durch mehrmaliges mittiges Falten des Materials in Blattform gebildet ist, um ein annäherndes Quadrat zu bilden.

8. Verfahren zum Auftragen einer Lackformulierung nach Anspruch 7, wobei das semi-saugfähige Gewebe oder Vlies in Blattform vier Mal mittig gefaltet wird, um ein annäherndes Quadrat zu bilden.

9. Verfahren zum Auftragen einer Lackformulierung nach einem der Ansprüche 3 bis 8, wobei das elastische semi-saugfähige Gewebe oder Vlies ein Papierhandtuch ist.

10. Verfahren zum Auftragen einer Lackformulierung nach einem der vorhergehenden Ansprüche, wobei die Mikrosphären Glaskügelchen sind.

11. Verfahren zum Auftragen einer Lackformulierung nach Anspruch 10, wobei die Glaskügelchen eine Partikelgrößenverteilung zwischen 30 bis 1 15 Mikron mit einer effektiven maximalen Partikelgröße von 120 Mikron haben und 20 bis 80 Mikron mit einer effektiven maximalen Partikelgröße von 85 Mikron haben.

12. Verfahren zum Auftragen einer Lackformulierung nach Anspruch 10, wobei die Glaskügelchen eine Partikelgrößenverteilung von 30 bis 105 Mikron mit einer effektiven maximalen Partikelgröße von 1 15 Mikron haben.

13. Verfahren zum Auftragen einer Lackformulierung nach einem der Ansprüche 1 bis 9, wobei die Mikrosphären Kunststoffkügelchen sind.

14. Verfahren zum Auftragen einer Lackformulierung nach einem der vorhergehenden Ansprüche, wobei die Mikrosphären 3 bis 6 Vol.% der Lackformulierung umfassen.

## Revendications

1. Procédé d'application d'une formulation de peinture à un substrat ayant des imperfections superficielles de surface comprenant le fait
d'appliquer, avec un premier applicateur de peinture, la formulation de peinture aux imperfections superficielles dans la surface à peindre,
de permettre à la formulation de peinture appliquée de sécher jusqu'à ce qu'elle soit au moins sèche au toucher,
d'appliquer, avec un deuxième applicateur de peinture, la formulation de peinture à la surface du substrat pour produire une première surface de peinture,
dans lequel la formulation de peinture comprend un latex à base d'eau et des microsphères, où les microsphères ont une taille de particule effective et sont présentes en une quantité effective pour à la fois fournir une finition de peinture lisse et remplir, couvrir ou dissimuler des défauts superficiels dans un substrat peint lorsque la formulation de peinture est sèche,
dans lequel la taille de particule effective est comprise entre 10 et 200 microns et dans lequel la quantité effective de microsphères est comprise entre 3 et jusqu'à 12% en volume de la formulation de peinture.

2. Procédé d'application d'une formulation de peinture selon la revendication 1, comprenant en outre le fait
de permettre à la première surface de peinture de sécher jusqu'à ce qu'elle soit au moins sèche au toucher,
et d'appliquer, avec un troisième applicateur de peinture, la formulation de peinture à la première surface de peinture pour produire une deuxième surface de peinture.

3. Procédé d'application d'une formulation de peinture selon la revendication 1 ou 2, dans lequel le premier applicateur de peinture est un matériau souple semi-absorbant tissé ou non-tissé sous forme de feuille.

4. Procédé d'application d'une formulation de peinture selon la revendication 3, dans lequel le premier applicateur de peinture est un angle du matériau semi-absorbant tissé ou non-tissé sous forme de feuille.

5. Procédé d'application d'une formulation de peinture selon la revendication 4, dans lequel l'angle est formé en pliant au moins une fois le matériau semi-absorbant tissé ou non-tissé sous forme de feuille.

6. Procédé d'application d'une formulation de peinture selon la revendication 5, dans lequel l'angle est formé en pliant en deux le matériau semi-absorbant tissé ou non-tissé sous forme de feuille plusieurs fois.

7. Procédé d'application d'une formulation de peinture selon la revendication 6, dans lequel l'angle du matériau semi-absorbant tissé ou non-tissé sous forme de feuille est formé en pliant en deux le matériau sous forme de feuille plusieurs fois pour former un carré approximatif.

8. Procédé d'application d'une formulation de peinture selon la revendication 7, dans lequel un matériau semi-absorbant tissé ou non-tissé sous forme de feuille est plié en deux quatre fois pour former un carré approximatif.

9. Procédé d'application d'une formulation de peinture selon l'une quelconque des revendications 3 à 8, dans lequel le matériau souple semi-absorbant tissé ou non-tissé est une serviette en papier.

10. Procédé d'application d'une formulation de peinture selon l'une quelconque des revendications précédentes, dans lequel les microsphères sont des billes de verre.

11. Procédé d'application d'une formulation de peinture selon la revendication 10, dans lequel les billes de verre ont une distribution de taille de particule comprise entre 30 et 115 microns avec une taille de particule effective maximale de 120 microns et entre 20 et 80 microns avec une taille de particule effective maximale de 85 microns.

12. Procédé d'application d'une formulation de peinture selon la revendication 10, dans lequel les billes de verre ont une distribution de taille de particule comprise entre 30 et 105 microns avec une taille de particule effective maximale de 115 microns.

13. Procédé d'application d'une formulation de peinture selon l'une quelconque des revendications 1 à 9, dans lequel les microsphères sont des billes en plastique.

14. Procédé d'application d'une formulation de peinture selon l'une quelconque des revendications précédentes, dans lequel les microsphères comprennent entre 3% et 6% en volume de la formulation de peinture.
